# EUROPEAN PATENT SPECIFICATION

(11) **EP 3 397 527 B1**
(45) Date of publication and mention of the grant of the patent: **05.02.2020**
(21) Application number: 16831487.0
(22) Date of filing: 22.12.2016
(51) Int. Cl.: B60S 3/00, B60S 3/04

(54) **APPARATUS SUITABLE FOR DRYING VEHICLES**
VORRICHTUNG ZUM TROCKNEN VON FAHRZEUGEN
APPAREIL CONÇU POUR SÉCHER DES VÉHICULES

(30) Priority: 28.12.2015 IT UB20159669
(43) Date of publication of application: 07.11.2018
(73) Proprietor: Best Wash Bike S.r.l., 20161 Milan (IT)
(72) Inventor: TOLDA, Paolo, 20161 Milano (IT)
(74) Representative: Mittler, Andrea
(86) International application number: PCT/EP2016/082493
(87) International publication number: WO 2017/114765

(56) References cited:
- EP-A2- 2 006 175
- US-A- 5 367 739
- US-A1- 2009 217 955
- US-B1- 6 842 997

## Description

The present invention relates to an apparatus suitable for drying vehicles, in particular for two- or three-wheel vehicles, for example motorcycles or bicycles, but also for lightweight, four-wheel vehicles, for example quads. Document EP 2 006 175 A2 is considered to be the prior art closest to the subject-matter of claim 1.

Containment structures for cleaning motorcycles or bicycles are known from the prior art. Said containment structures are closed to avoid the dispersion of the wash liquid into the environment.

The structures comprise a support base for the motorcycle or bicycle and side walls provided with washing nozzles for discharging jets of wash liquid, which allow the motorcycle or bicycle to be washed.

The washing of the motorcycle or bicycle occurs automatically with a preset sequence of steps; the sequence may comprise washing, rinsing and/or waxing steps.

The aforesaid cleaning apparatuses generally are not equipped with a drying apparatus and therefore do not provide a drying step at the end of the washing steps. Certain cleaning apparatuses provide a drying step of the vehicle without obtaining an optimal drying thereof.

In view of the prior art, it is the object of the present invention to provide an apparatus suitable for drying vehicles which is more efficient than the known ones.

According to the present invention, such an object is achieved by means of an apparatus suitable for drying vehicles, comprising:
- a base structure for positioning the vehicle,
- a containment structure of the vehicle, which is associated with the base structure, and comprising at least two side walls opposite to the side surfaces of the vehicle once the vehicle has been arranged on the base structure, and a top wall opposite to the top surface of the vehicle once the vehicle has been arranged on the base structure, characterized in that it comprises drying means of the vehicle associated with said containment structure and suitable for drying the vehicle, said drying means comprising at least one drying air director element and movement means of said at least one director element, which are adapted to move it according to an oscillating movement with respect to the containment structure of the vehicle.

The features and advantages of the present invention will become apparent from the following detailed description of a practical embodiment thereof, shown by way of non-limiting example in the accompanying drawings, in which:
figure 1 is a perspective view of an apparatus suitable for drying a vehicle combined with a cleaning apparatus according to one embodiment of the present invention;
figure 2 is a diagrammatic perspective view of the apparatus in figure 1;
figure 3 is a diagrammatic perspective view of a side wall of the apparatus in figure 1;
figure 4 is a diagrammatic perspective view of the top wall of the apparatus in figure 1;
figure 5 is a diagrammatic side view of the drying apparatus alone in figure 1;
figure 6 is a perspective view of a part of a drying device of the drying apparatus in figure 5;
figures 7 and 8 are top views of the drying device in figure 6 in a first operating position (figure 7) and a second operating position (figure 8);
figure 9 is a diagrammatic side view of the drying device in figure 6;
figure 10 is a diagrammatic side view of the drying device in figure 6, in the resting and operating positions.

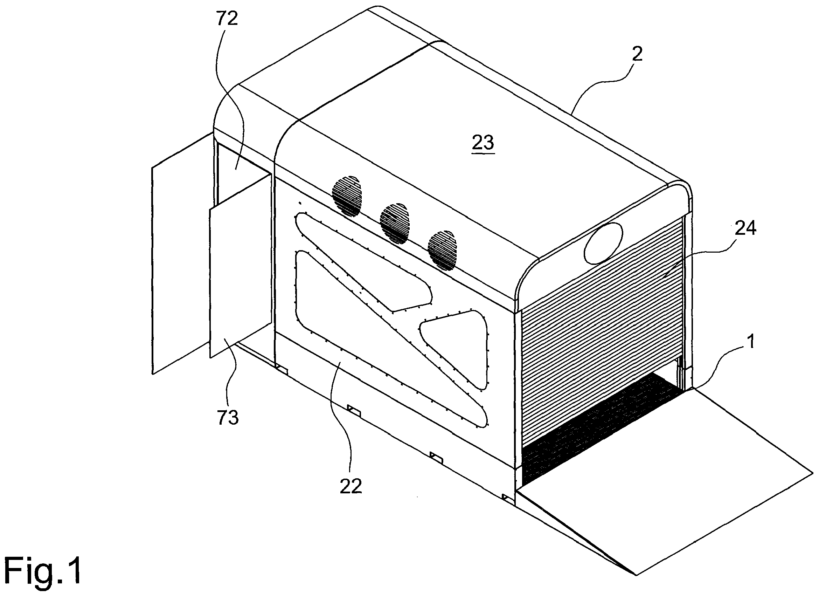

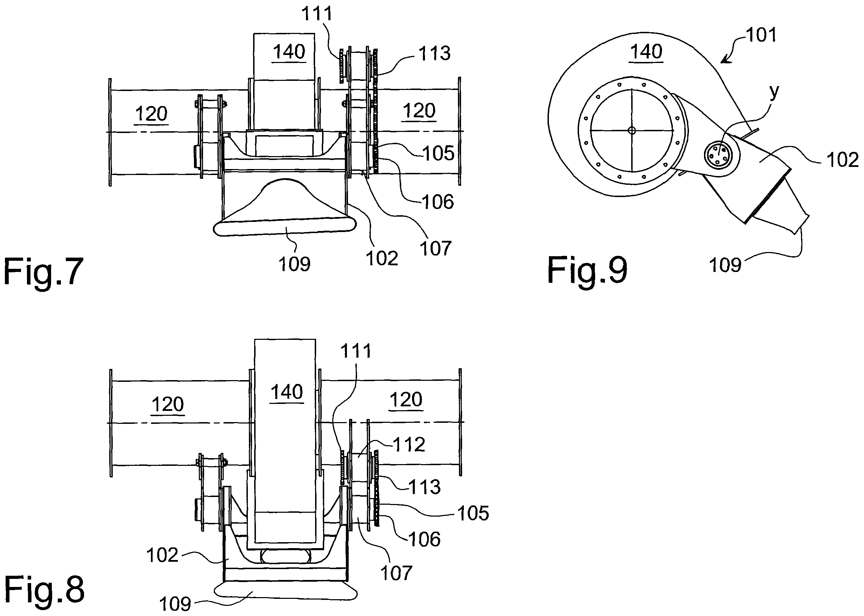

Figures 1 to 10 show an apparatus suitable for drying vehicles according to one embodiment of the present invention; the drying apparatus is part of a cleaning and drying apparatus again according to one embodiment of the present invention. Vehicle means a two-wheel or three-wheel vehicle, with or without an engine, such as for example a motorcycle or a bicycle or tricycle; the term "vehicle" also means a lightweight four-wheel vehicle, such as for example a quad.

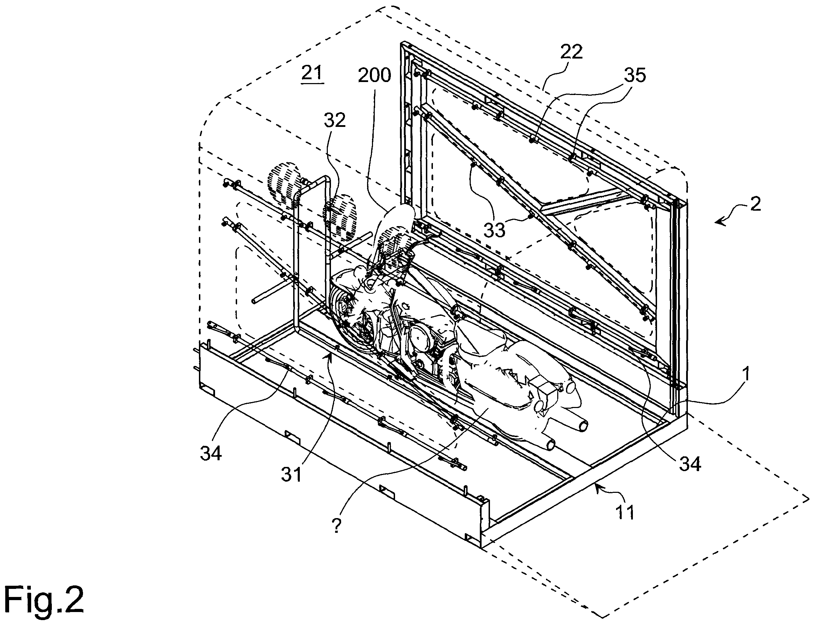

The cleaning and drying apparatus comprises a base structure 1 on which vehicle 200 is arranged for the cleaning (figures 1 and 2); the base structure 1 is a drilled platform and preferably comprises a tank for containing the wash residues. The base structure 1 comprises a middle area 11 on which the vehicle is arranged for the cleaning.

The cleaning and drying apparatus comprises a containment structure 2 of the vehicle, which is associated with the base structure 1 and is adapted to define a cleaning chamber for the vehicle. The containment structure 2 comprises at least one front wall 21 opposite to the front part of the vehicle once the vehicle has been arranged on the base structure 1, two side walls 22 opposite to each other and positioned along the side walls of the vehicle once the vehicle has been arranged on the base structure, a top wall 23 opposite to the base structure 1, a gate 24 arranged in the rear part of the containment structure for the entry of the vehicle to be cleaned into the cleaning chamber or for the exit of the washed vehicle.

The cleaning and drying apparatus comprises various pluralities of washing nozzles arranged in the containment structure 2.

A first plurality 31 of washing nozzles, preferably six, is arranged in the middle area 11 of the base structure 1 for cleaning the below part of the vehicle or underbody.

A second plurality 32 of washing nozzles is arranged in the front wall 21 for cleaning the front part of the vehicle.

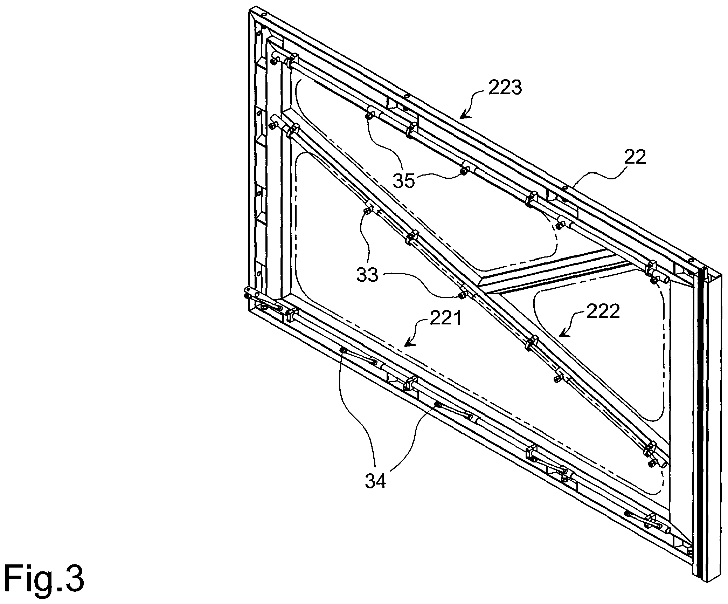

Three other pairs of pluralities of washing nozzles 33-35 are arranged in the side walls 22 of the containment structure 2 (figure 3); the pairs of pluralities of washing nozzles 33-35 allow the cleaning of the side walls and of the top part of the vehicle.

The pair of plurality of washing nozzles 33 is arranged in the lower part 221 of the side walls 22 and longitudinally extends preferably for the whole length of each side wall 22.

The pair of plurality of washing nozzles 34 is arranged in the central part 222 of the side walls 22 and diagonally extends on each side wall 22.

The pair of plurality of washing nozzles 35 is arranged in the top part 223 of the side walls 22 and longitudinally extends preferably for the whole length of each side wall 22.

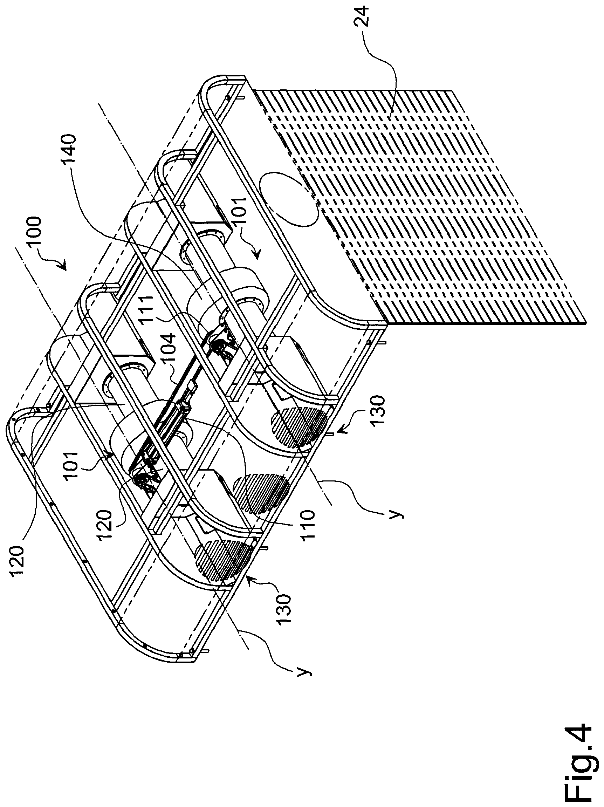

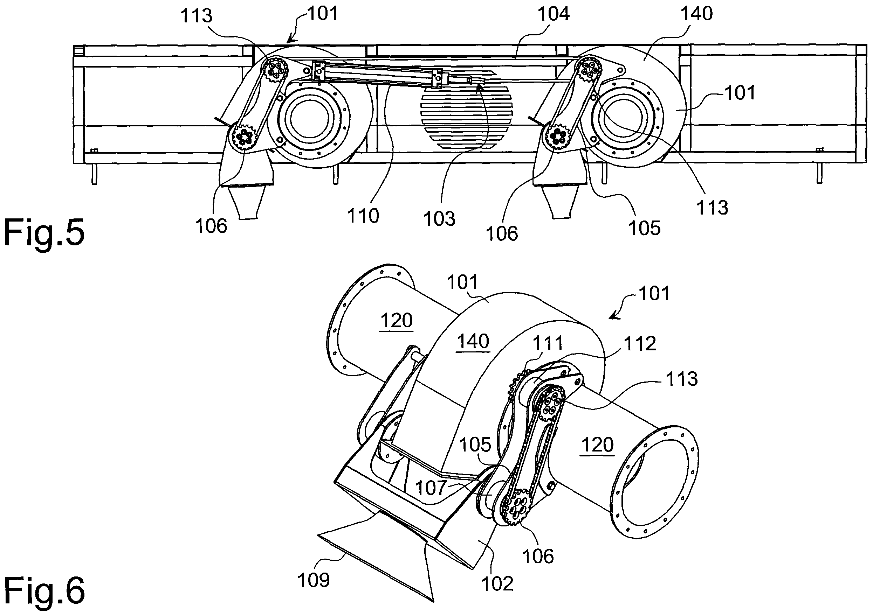

The drying apparatus 100 comprises at least one drying device 101 associated with the containment structure 2 of the vehicle; the at least one drying device 101 is preferably arranged on the top wall 23 (figures 4 and 5) and is supported thereby. The drying apparatus 100 preferably comprises two drying devices 101 arranged on the top wall 23 (figures 4 and 5) and supported thereby. The drying devices 101 each comprise two inner pipe fans 120 and arranged at air intakes 130 of the top wall 23 of the containment structure, and a conveyor 140 of the air flux towards the inside of the containment structure 2 of the vehicle to be dried.

The drying devices 101 (figures 6 to 10) each comprise a director element 102 of the drying air flux which oscillates with respect to the containment structure 2 of the vehicle; in particular, each director element 102 oscillates about an axis Y perpendicular to the side walls 22 of the containment structure 2 and preferably transverse to the side parts of vehicle 200. Each director element 102 is equipped with a mouth 109 for the discharge of the drying air flux.

The drying apparatus comprises movement means 103 for the director elements 102 which are adapted to move each director element 102 according to an oscillating movement about axis Y. The movement means 103 comprise a device 110 adapted to move a first chain 104 which in turn is connected to two gear wheels 111 arranged in the structure of the top wall 23; preferably, device 110 is a compressed air cylinder inside of which a piston acts, the rod of which is connected to chain 104.

The gear wheels 111 are connected to one end of shafts 112 which can be rotated about axis Y, and are connected at the other end with gear wheels 113.

The latter are connected by means of two chains 105 to gear wheels 106 fixed on the director elements 102 by means of hubs 107 and which can be rotated about axis Y. A translation movement of the piston on the compressed air cylinder 110 corresponds to a movement of chain 104 which allows the rotation of the shafts 112 and a subsequent rotation of the director elements 102 by means of the rotation of the gear wheels 113, 106 connected by the chains 105.

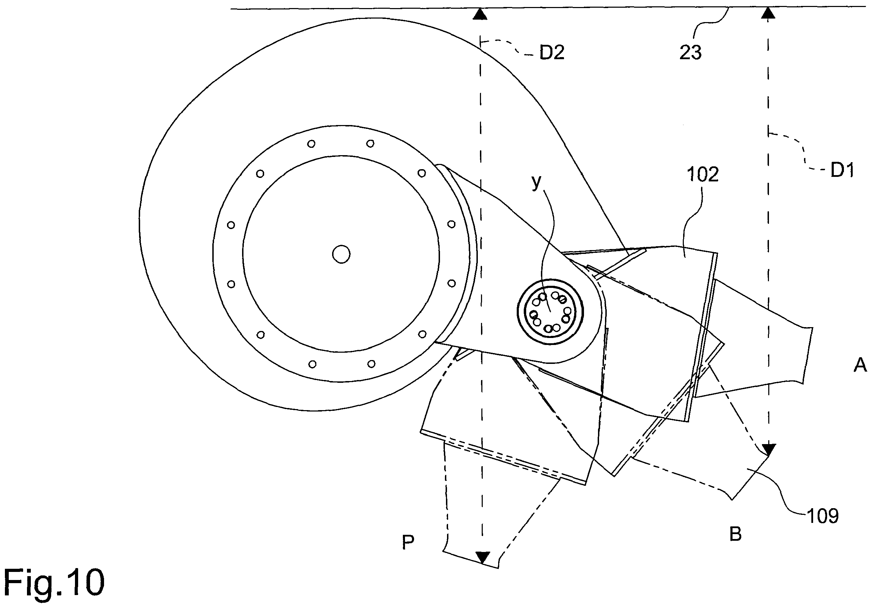

As shown in figure 10, in resting position A, that is when the drying device 101 is not operating, each director element 102 is adjacent to the top wall 23 of the containment structure 2. Thereby, the director elements 102 do not interfere with any other device inside the cleaning chamber.

In operating position, during the drying of the vehicle, each director element 102 rotates from a position B, in which mouth 109 of the director element 102 has a minimum distance D1 (of for example, 500 mm) from the top wall 23, to a position C, in which mouth 109 of the director element 102 has a maximum distance D2 (of for example, 800 mm) from the top wall 23.

During the drying of the vehicle, each director element 102 oscillates orthogonally to axis Y between the operating positions B and C. Said oscillation of the director elements 102 allows a more effective distribution of the drying air flux over the vehicle and improves the drying thereof.

The drying devices 101 are simultaneously controlled by means of commands from a control panel (not shown in the drawings), which is easily accessible from a side access 72 which can be closed by a door 73.

According to a variant of the embodiment of the present invention, the director element 102 of the drying air flux of one drying device 101 of two drying devices 101 is fixed while the director element 102 of the drying air flux of the other drying device 101 of two drying devices 101 oscillates with respect to the containment structure 2 of the vehicle in the manner already described for the embodiment of the present invention.

## Claims

1. Apparatus suitable for drying vehicles, comprising:
- a base structure (1) for positioning the vehicle,
- a containment structure (2) of the vehicle which is associated with the base structure, the containment structure comprising at least two side walls (22) opposite to the side surfaces of the vehicle once the vehicle is placed on the base structure and a top wall (23) opposite to the top surface of the vehicle once the vehicle is placed on the base structure, wherein it further comprises drying means (100) of the vehicle supported by the containment structure and suitable for drying the vehicle, said drying means comprising at least one drying air director element (102), **characterised by** comprising movement means (103) of said at least one drying air director element which are suitable for moving it according to an oscillating movement with respect to the containment structure of the vehicle.

2. Apparatus according to claim 1, **characterized in that** said drying means are supported by the top wall of the containment structure of the vehicle.

3. Apparatus according to claim 2, **characterized in that** said movement means are suitable for rotating said at least one drying air director element around to an axis (Y) perpendicular to the side walls of the containment structure so that said at least one drying air director element oscillates between a first position (B) at a first distance (D1) from the top wall and a second position (C) at a second distance (D2) from the top wall, wherein said first distance is lower than said second distance.

4. Apparatus according to claim 3, **characterized in that** said movement means are suitable for arranging said at least one drying air director element in a third position (A) at an distance from the top wall which is lower than said first distance (D1) once the drying of the vehicle is finished.

5. Apparatus according to claim 3, **characterized in that** said movement means (103) comprise chain (104, 105) and gear wheel (111, 113, 106) means for rotating said at least one drying air director element with respect to the containment structure of the vehicle.

6. Apparatus according to claim 5, **characterized in that** said drying means comprise two drying air director elements (102) and two drying air flux conveyors (140) separated from each other and to which said two drying air director elements (102) are connected, said movement means comprising two pairs of gear wheels (113, 106) respectively associated to said top wall and said drying air director elements, said pairs of gear wheels being connected to each other by chain.

7. Apparatus according to claim 6, **characterized in that** said movement means comprise another chain (104) and two shafts (112) having at one end two gear wheels (111) engaged with said other chain and at the other end two gear wheels associated to said top wall, said movement means comprise a movement device (110) associated to said other chain and suitable for moving said other chain.

8. Apparatus according to claim 7, **characterized in that** said movement device (110) is a compressed air cylinder having the piston rod integral with said other chain.

9. Apparatus suitable for cleaning a vehicle, comprising a drying apparatus as defined in any one of the preceding claims.

## Patentansprüche

1. Vorrichtung zum Trocknen von Fahrzeugen, umfassend:
- eine Basisstruktur (1) zur Positionierung des Fahrzeugs,
- eine der Basisstruktur zugeordnete Eingrenzungsstruktur (2), wobei die Eingrenzungsstruktur zumindest zwei Seitenwände (22) gegenüber den Seitenflächen des Fahrzeugs, wenn das Fahrzeug auf der Basisstruktur platziert wird, und eine obere Wand (23) gegenüber der Oberseite des Fahrzeugs, wenn das Fahrzeug auf der Basisstruktur platziert wird, umfasst,
wobei sie zudem Trocknungsmittel (100) des Fahrzeugs umfasst, die durch die Eingrenzungsstruktur getragen werden und zum Trocken des Fahrzeugs geeignet sind, wobei die Trocknungsmittel zumindest ein Trocknungsluftleitelement umfassen,
**dadurch gekennzeichnet, dass** sie Bewegungsmittel (103) des zumindest einen Trocknungsluftleitelements umfasst, die dazu geeignet sind, es gemäß einer Oszillationsbewegung in Bezug auf die Eingrenzungsstruktur des Fahrzeugs zu bewegen.

2. Vorrichtung nach Anspruch 1, **dadurch gekennzeichnet, dass** die Trocknungsmittel durch die obere Wand der Eingrenzungsstruktur des Fahrzeugs getragen werden.

3. Vorrichtung nach Anspruch 2, **dadurch gekennzeichnet, dass** die Bewegungsmittel zur Drehung des zumindest einen Trocknungsluftleitelements um eine Achse (Y) senkrecht zu den Seitenwänden der Eingrenzungsstruktur geeignet sind, so dass das zumindest eine Trocknungsluftleitelement zwischen einer ersten Position (B) bei einem ersten Abstand (D1) von der oberen Wand und einer zweiten Position (C) bei einem zweiten Abstand (D2) von der oberen Wand oszilliert, wobei der erste Abstand geringer ist als der zweite Abstand.

4. Vorrichtung nach Anspruch 3, **dadurch gekennzeichnet, dass** die Bewegungsmittel zur Anordnung des zumindest einen Trocknungsluftleitelements in einer dritten Position (A) bei einem Abstand von der oberen Wand, der geringer ist als der erste Abstand (D1), wenn das Trocknen des Fahrzeugs beendet ist, geeignet sind.

5. Vorrichtung nach Anspruch 3, **dadurch gekennzeichnet, dass** die Bewegungsmittel (103) Kettenmittel (104, 105) und Zahnradmittel (111, 113,106) zur Drehung des zumindest einen Trocknungsluftleitelements in Bezug auf die Eingrenzungsstruktur des Fahrzeugs umfassen.

6. Vorrichtung nach Anspruch 5, **dadurch gekennzeichnet, dass** die Trocknungsmittel zwei Trocknungsluftleitelemente (102) und zwei Trocknungsluftflussförderer (140), die voneinander getrennt sind und mit denen die zwei Trocknungsluftleitelemente (102) verbunden sind, umfassen, wobei die Bewegungsmittel zwei Paar Zahnräder (113, 106) umfassen, die jeweils der oberen Wand und den Trocknungsluftleitelementen zugeordnet sind, wobei die Paare der Zahnräder durch eine Kette miteinander verbunden sind.

7. Vorrichtung nach Anspruch 6, **dadurch gekennzeichnet, dass** die Bewegungsmittel eine weitere Kette (104) und zwei Wellen (112), die an einem Ende zwei Zahnräder (111), die mit der weiteren Kette im Eingriff sind, und am anderen Ende zwei Zahnräder, die der oberen Wand zugeordnet sind, aufweisen, umfassen, wobei die Bewegungsmittel eine Bewegungsvorrichtung (110) umfassen, die der weiteren Kette zugeordnet ist und zur Bewegung der weiteren Kette geeignet ist.

8. Vorrichtung nach Anspruch 7, **dadurch gekennzeichnet, dass** die Bewegungsvorrichtung (110) ein Druckluftzylinder ist, der die Kolbenstange integral mit der weiteren Kette aufweist.

9. Vorrichtung zur Reinigung eines Fahrzeugs, umfassend eine Trocknungsvorrichtung nach einem der vorhergehenden Ansprüche.

## Revendications

1. Appareil approprié pour sécher des véhicules comprenant :
- une structure de base (1) pour positionner le véhicule,
- une structure de confinement (2) du véhicule qui est associée avec la structure de base, la structure de confinement comprenant au moins deux parois latérales (22) opposées aux surfaces latérales du véhicule, une fois que le véhicule est placé sur la structure de base et une paroi supérieure (23) opposée à la surface supérieure du véhicule une fois que le véhicule est placé sur la structure de base, dans lequel il comprend en outre des moyens de séchage (100) du véhicule supportés par la structure de confinement et appropriés pour sécher le véhicule, lesdits moyens de séchage comprenant au moins un élément de direction d'air de séchage (102), **caractérisé en ce qu'**il comprend des moyens de déplacement (103) dudit au moins un élément de direction d'air de séchage qui sont appropriés pour le déplacer selon un mouvement d'oscillation par rapport à la structure de confinement du véhicule.

2. Appareil selon la revendication 1, **caractérisé en ce que** lesdits moyens de séchage sont supportés par la paroi supérieure de la structure de confinement du véhicule.

3. Appareil selon la revendication 2, **caractérisé en ce que** lesdits moyens de déplacement sont appropriés pour faire tourner ledit au moins un élément de direction d'air de séchage autour d'un axe (Y) perpendiculaire aux parois latérales de la structure de confinement de sorte que ledit au moins un élément de direction d'air de séchage oscille entre une première position (B) à une première distance (D1) de la paroi supérieure et une deuxième position (C) à une seconde distance (D2) de la paroi supérieure, dans lequel ladite première distance est inférieure à ladite seconde distance.

4. Appareil selon la revendication 3, **caractérisé en ce que** lesdits moyens de déplacement sont appropriés pour agencer ledit au moins un élément de direction d'air de séchage dans une troisième position (A) à une distance de la paroi supérieure qui est inférieure à ladite première distance (D1) une fois que le séchage du véhicule est terminé.

5. Appareil selon la revendication 3, **caractérisé en ce que** lesdits moyens de déplacement (103) comprennent une chaîne (104, 105) et des moyens de roue dentée (111, 113, 106) pour faire tourner ledit au moins un élément de direction d'air de séchage par rapport à la structure de confinement du véhicule.

6. Appareil selon la revendication 5, **caractérisé en ce que** lesdits moyens de séchage comprennent deux éléments de direction d'air de séchage (102) et deux transporteurs de flux d'air de séchage (140) séparés l'un de l'autre et auxquels lesdits deux éléments de direction d'air de séchage (102) sont raccordés, lesdits moyens de déplacement comprenant deux paires de roues dentées (113, 106) respectivement associées à ladite paroi supérieure et auxdits éléments de direction d'air de séchage, lesdites paires de roues dentées étant raccordées entre elles par une chaîne.

7. Appareil selon la revendication 6, **caractérisé en ce que** lesdits moyens de déplacement comprennent une autre chaîne (104) et deux arbres (112) ayant, au niveau d'une extrémité, deux roues dentées (111) mises en prise avec ladite autre chaîne et au niveau de l'autre extrémité, deux roues dentées associées à ladite paroi supérieure, lesdits moyens de déplacement comprennent un dispositif de déplacement (110) associé à ladite autre chaîne et approprié pour déplacer ladite autre chaîne.

8. Appareil selon la revendication 7, **caractérisé en ce que** ledit dispositif de déplacement (110) est un cylindre d'air comprimé ayant la tige de piston solidaire avec ladite autre chaîne.

9. Appareil approprié pour nettoyer un véhicule, comprenant un appareil de séchage selon l'une quelconque des revendications précédentes.
